# EUROPEAN PATENT APPLICATION

(11) **EP 4 495 961 A1**
(43) Date of publication of application: **22.01.2025**
(21) Application number: 23876652.1
(22) Date of filing: 09.10.2023
(51) Int. Cl.: H01B 17/58, H01B 17/60, H01B 19/00, H01B 17/38

(54) **HOLLOW INSULATING TUBE, PREPARATION METHOD FOR HOLLOW INSULATING TUBE, AND COMPOSITE INSULATOR**

(30) Priority: 13.10.2022 CN 202211250971
(71) Applicant: Jiangsu Shemar Electric Co., Ltd., Nantong City, Jiangsu 226017 (CN)
(72) Inventor: GUO, Qiang, Nantong, Jiangsu 226017 (CN); LIU, Chao, Nantong, Jiangsu 226017 (CN); ZHANG, Xinxin, Nantong, Jiangsu 226017 (CN); ZHANG, Linjun, Nantong, Jiangsu 226017 (CN); SUN, Yinjian, Nantong, Jiangsu 226017 (CN)
(74) Representative: Mewburn Ellis LLP
(86) International application number: PCT/CN2023/123582
(87) International publication number: WO 2024/078450

(57) **Abstract**

Disclosed in the present invention is a hollow insulating tube, comprising, sequentially arranged from inside to outside, an inner axial layer, an annular layer, and an outer axial layer. The inner axial layer and the outer axial layer each comprise a plurality of axial fiber yarns. The annular layer comprises a plurality of annular fiber yarns. The inner axial layer, the annular layer and the outer axial layer are dipped with a resin adhesive solution, which is then cured to form the hollow insulating tube. For the hollow insulating tube, the structural design of the annular layer, the inner axial layer and the outer axial layer significantly improves the circumferential strength and the axial strength of the hollow insulating tube. The main body structure of the hollow insulating tube is prepared by, after dipping yarn in an adhesive, directly carrying out heat transfer, curing and pultrusion on the yarn by means of a curing mold, so that the curing forming efficiency is greatly improved, the product processing period is shortened, and the product production efficiency is improved. The application further discloses a preparation method for the hollow insulating tube, and a composite insulator.

## Description

### TECHNICAL FIELD

The present application relates to the field of power transmission insulation device technologies, and in particular, to a hollow insulating tube, a manufacturing method for a hollow insulating tube, and a composite insulator.

### BACKGROUND

Most existing composite insulators are hollow insulating tubes formed by wet winding or pultrusion. Layering structures of the hollow insulating tube formed by wet winding are all formed by hoop winding, and yarn layers are concentrated in a circumferential direction, without a tension effect of axial yarns; ultimately, the hollow insulating tube has a higher capability to bear a circumferential force (internal pressure or external pressure) and a lower capability to bear an axial force (bending stress or compression stress). Layering structures of the hollow insulating tube formed by pultrusion are all formed by axial pultrusion, without a tension effect of circumferential yarns; ultimately, the hollow insulating tube has a lower capability to bear the circumferential force (internal pressure or external pressure) and a higher capability to bear the axial force (bending stress or compression stress).

The hollow insulating tubes formed by the above two processes cannot balance the circumferential force and the axial force, and cannot optimize load-bearing capacities of the hollow insulating tubes in the two directions, and thus the scope of application is limited. In order to improve an axial pressure-bearing capacity of the hollow insulating tube formed by wet winding, a wall thickness of the hollow insulating tube is required to be greatly increased, leading to a problem of high manufacturing costs. Moreover, for the hollow insulating tube formed by wet winding, yarns are required to be wetted and wound around a surface of a mandrel to form a winding tube preform, and then the winding tube preform is transferred to an oven for heating and curing. That is, the winding process and the curing process are carried out step by step, and the product has a long production cycle, low production efficiency, the layout of production line is scattered, and the loss is high. For the hollow insulating tube formed by pultrusion, even if the wall thickness of the tube is increased, a circumferential pressure-bearing capacity of the hollow insulating tube still cannot be significantly improved.

### SUMMARY

With respect to the shortcomings of the prior art, an object of the present application is to provide a hollow insulating tube. Axial fiber yarns and circumferential fiber yarns of the hollow insulating tube are impregnated and then heated and molded through a curing mold. Through the structural design of a circumferential layer arranged in a circumferential direction and an inner axial layer and an outer axial layer that are arranged in an axial direction of the hollow insulating tube, a circumferential pressure-bearing capacity and an axial pressure-bearing capacity of the hollow insulating tube are improved at the same time. In addition, a main structure of the hollow insulating tube is made by impregnating the yarns and then curing and pultruding the yarns directly through the curing mold by direct contact heat transfer, which greatly improves curing molding efficiency, shortens a product processing cycle, and improves product manufacturing efficiency. Layering structures of the hollow insulating tube are reasonably designed. Under the condition of achieving the same performance, a wall thickness of the hollow insulating tube can be reduced, saving materials and reducing material costs.

In order to achieve the above object, the present application employs the following technical means. A hollow insulating tube includes an inner axial layer, a circumferential layer, and an outer axial layer that are arranged sequentially from inside to outside. Each of the inner axial layer and the outer axial layer includes a plurality of axial fiber yarns. The circumferential layer includes a plurality of circumferential fiber yarns. The inner axial layer, the circumferential layer, and the outer axial layer are wetted with resin liquid and then cured to form the hollow insulating tube. Through the structural design of the circumferential layer, the inner axial layer, and the outer axial layer of the hollow insulating tube, mechanical strength required by the hollow insulating tube is achieved.

Among others, the circumferential layer includes a forward winding layer and a backward winding layer. The forward winding layer and the backward winding layer are arranged adjacent to each other in a radial direction of the hollow insulating tube, which can enhance process stability of the circumferential layer and also improve circumferential strength of the hollow insulating tube.

Among others, a winding angle of the circumferential layer ranges from 45° to 90°.

Among others, a winding angle of the forward winding layer and a winding angle of the backward winding layer range from 45° to 85°. The circumferential fiber yarns are limited by the actual winding layer design and the selected types of materials. The winding angle is set to be 45° to 85°, which is mainly to provide the circumferential strength of the hollow insulating tube. A winding process with a winding angle less than 45° is small-angle winding, resulting in a difficult molding process. When the winding angle is greater than 85°, the fiber yarns are approximately purely circumferentially wound. Simultaneous winding in the forward and backward directions does not have a significant effect on improving the circumferential strength of the hollow insulating tube.

Among others, linear densities of the fiber yarns of the inner axial layer, the circumferential layer, and the outer axial layer are in an increasing order, which can appropriately reduce manufacturing costs of the hollow insulating tube.

Among others, a linear density of the fiber yarns of the inner axial layer ranges from 400 tex to 2400 tex, a linear density of the fiber yarns of the circumferential layer ranges from 1200 tex to 9600 tex, and a linear density of the fiber yarns of the outer axial layer ranges from 4800 tex to 19200 tex, to ensure overall performance of the hollow insulating tube.

Among others, the axial fiber yarns and the circumferential fiber yarns are polyester fibers or glass fibers. The glass fibers are cost-effective and can control material costs to the greatest extent to achieve economic maximization of the product. The polyester fibers have better chemical properties than the glass fibers and are corrosion-resistant, and there is no need to provide a polyester lining on an inner wall of the hollow insulating tube, which can reduce processing difficulty and material costs.

Among others, the hollow insulating tube further includes a lining layer. The lining layer is a fiber mat and arranged on an inner side of the inner axial layer. The lining layer can ensure a better process molding effect on the inner wall of the hollow insulating tube, a uniform layering structure, and uniform resin distribution.

Among others, the fiber mat is a polyester surfacing mat or a glass fiber mat. The use of the polyester surfacing mat can meet a special functional requirement of the product, such as hydrofluoric acid (HF) resistance or arcing resistance.

Among others, the hollow insulating tube further includes an outer mat layer. The outer mat layer is a fiber mat and arranged on an outside of the outer axial layer. The outer mat layer is a glass fiber mat, which can cover the axial fiber yarns, isolate the axial fiber yarns from the inner wall of the mold, prevent direct contact between the axial fiber yarns and the inner wall of the mold, and ensure uniform distribution of the axial fiber yarns and the resin, resulting in better process moldability.

Among others, a roughness of an outer surface of the outer mat layer is less than that of an inner surface. The outer surface of the outer mat layer which is in contact an inner wall of a forming mold is made relatively smooth, which can reduce forward resistance during the molding and ensure process stability of the hollow insulating tube.

Among others, the resin liquid may be any one of polyurethane resin, epoxy resin, vinyl resin, phenolic resin, and unsaturated polyester resin, so the manufactured hollow insulating tube has stable mechanical properties and excellent electrical properties.

With respect to the shortcomings of the prior art, another object of the present application is to provide a manufacturing method for a hollow insulating tube, including the following steps: S101, forming an inner axial layer outside a mandrel by pultrusion; S102, forming a circumferential layer outside the inner axial layer by winding; S103, forming an outer axial layer outside the circumferential layer by pultrusion, to obtain a preform of the hollow insulating tube; and S104, curing the preform to obtain the hollow insulating tube. The hollow insulating tube manufactured by the above method has a simple overall manufacturing process, high efficiency, and a low cost.

Among others, in step S102, the circumferential layer is formed outside the inner axial layer by successive winding in forward and backward directions, at a winding angle ranging from 45° to 85°, which can improve circumferential strength of the hollow insulating tube, match a winding speed with a pultrusion speed, and have high molding efficiency and good finished product quality.

Among others, the method further includes, subsequent to step S103 and prior to step S104, step S11 of covering an outside of the outer axial layer with a fiber mat to form an outer mat layer, which can cover the outer axial layer, isolate the outer axial layer from the inner wall of the mold, prevent direct contact between the outer axial layer and the inner wall of the mold, and improves process moldability.

Among others, the method further includes, prior to step S101, step S10 of covering an outside of the mandrel with a fiber mat to form a lining layer, which can ensure that the inner wall of the hollow insulating tube has good corrosion resistance and electrical properties.

With respect to the shortcomings of the prior art, yet another objective of the present application is to provide a composite insulator, including flanges and an insulating shed, further including any hollow insulating tube as described above. The flanges are fixedly sleeved on two ends of the hollow insulating tube. The insulating shed covers an outer periphery of the hollow insulating tube.

The present application achieves the following beneficial effects. Different from the prior art, the hollow insulating tube in the present application adopts the layering structure including the inner axial layer, the circumferential layer, and the outer axial layer. The circumferential layer improves the circumferential pressure-bearing capacity of the hollow insulating tube, and the inner axial layer and the outer axial layer simultaneously improve the axial pressure-bearing capacity of the hollow insulating tube, leading to high overall mechanical strength. Moreover, the layering structure has a simple molding process, which facilitates compact layout of production lines, can greatly improve manufacturing efficiency, and leads to low overall manufacturing costs.

### BRIEF DESCRIPTION OF THE DRAWINGS

FIG. 1 is a partial sectional view of a hollow insulating tube 100 according to an embodiment of the present application.
FIG. 2 is a partial sectional view of a hollow insulating tube 200 according to an embodiment of the present application.
FIG. 3 is a schematic diagram showing a winding angle of the hollow insulating tube 200 according to an embodiment of the present application.
FIG. 4 is a partial sectional view of a hollow insulating tube 300 according to an embodiment of the present application.
FIG. 5 is a partial sectional view of a hollow insulating tube 400 according to an embodiment of the present application.
FIG. 6 is a partial sectional view of a hollow insulating tube 500 according to an embodiment of the present application.
FIG. 7 is a schematic structural view of a composite insulator 1000 according to an embodiment of the present application.

### DETAILED DESCRIPTION

Specific implementations of the present application will be described below as required. However, it should be understood that the implementations described herein merely illustrate typical examples of the present application, and may be embodied in various forms. Therefore, specific details disclosed herein are not to be considered as limitations, but merely as a basis for the claims and as a representative basis for teaching those skilled in the art to variously apply the present application in any appropriate manner in practice, including adopting various features disclosed herein in combination with features which may not be explicitly disclosed herein.

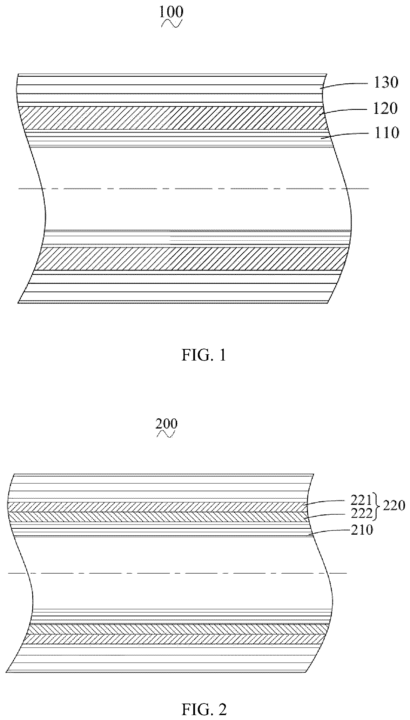

In an embodiment, as shown in FIG. 1, a hollow insulating tube 100 includes an inner axial layer 110, a circumferential layer 120, and an outer axial layer 130 that are arranged sequentially from inside to outside in a radial direction thereof. The inner axial layer 110 and the outer axial layer 130 include a plurality of axial fiber yarns and are formed by pultrusion. The "axial" refers to an axial direction of the hollow insulating tube 100. The circumferential layer 120 includes a plurality of circumferential fiber yarns and is formed by winding. The "circumferential" refers to a circumferential direction of the hollow insulating tube 100. The inner axial layer 110, the circumferential layer 120, and the outer axial layer 130 are wetted with resin liquid and then cured to form the hollow insulating tube 100.

A certain angle is formed between a winding direction of the circumferential layer 120 and the axial direction of the hollow insulating tube 100. The angle ranges from 45° to 90° (including 45° and 90°, similarly hereinafter), which can provide circumferential strength of the hollow insulating tube 100. The winding process with a winding angle less than 45° is small-angle winding, which leads to difficult process molding and low efficiency. A main reason is that, during the small-angle winding, a winding speed is required to be reduced to match a pultrusion speed. If the speed is excessively low, pauses and other phenomena may occur, which affects the molding process. An upper limit of the winding angle is designed to be 90°, which is an upper limit of the process design. Therefore, the winding angle is selected to range from 45° to 90°, which is beneficial for processing and molding, and can improve efficiency. A specific winding angle in actual production may be changed and designed within this range according to product performance requirements.

Specifically, the inner axial layer 110 is formed by pultruding the axial fiber yarns wetted with the resin liquid (hereinafter referred to as impregnation or impregnated), and then the circumferential layer 120 is formed by winding the impregnated circumferential fiber yarns around the inner axial layer 110, and then the outer axial layer 130 is formed by pultruding the impregnated axial fiber yarns outside the circumferential layer 120, so as to form a preform of the hollow insulating tube 100. The preform is heated and molded through the curing mold to finally obtain the hollow insulating tube 100. Certainly, in other implementations, the inner axial layer, the circumferential layer, and the outer axial layer may alternatively be formed by pultruding and winding fiber yarns layer by layer and impregnating, curing and molding the whole fiber yarns, which is not specifically limited herein.

The above hollow insulating tube 100 formed by pultrusion and winding processes (hereinafter referred to as pultrusion-winding process) achieves mechanical strength required by the hollow insulating tube 100 by sequentially designing the structure of the inner axial layer 110, the circumferential layer 120, and the outer axial layer 130. The circumferential layer 120 provides the hollow insulating tube 100 with a capability to bear a circumferential force (internal pressure or external pressure), that is, provides the hollow insulating tube 100 with circumferential strength, to prevent damage to the hollow insulating tube 100 when subjected to a circumferential internal load or external load. The inner axial layer 110 and the outer axial layer 130 can simultaneously provide the hollow insulating tube 100 with a capability to bear an axial force (bending stress or compression stress), that is, provide the hollow insulating tube 100 with axial strength, to prevent damage to the hollow insulating tube 100 when subjected to an axial tension load or compressive load. Therefore, compared with a winding tube and a pultrusion tube, the hollow insulating tube 100 in the present application can balance the circumferential force and the axial force, and the hollow insulating tube 100 can achieve optimal load-bearing capacities in two directions, and have a good performance and a wide application range. In addition, a main structure of the hollow insulating tube 100 is a product directly formed by heat transfer and curing through a curing mold after impregnation of the yarns. That is, a layering structure of the hollow insulating tube 100 is preformed, and then placed in the curing mold for heating and curing. As such, the product has a compact production process and compact layout of product lines. Moreover, the inner axial layer 110 can replace the conventional composite mat lining, which may eliminate the step of arranging the composite mat lining on the inner wall of the hollow insulating tube, thereby simplifying the forming process of the hollow insulating tube 100, greatly improving curing and molding efficiency, shortening a product processing cycle, and improving product manufacturing efficiency. In addition, the layering structure of the hollow insulating tube 100 in the present application is designed reasonably. Under the condition of achieving the same performance, a wall thickness of the hollow insulating tube 100 can be reduced, saving materials and reducing material costs.

In an implementation scenario, as shown in Table 1, design requirements for the hollow insulating tube are axial bending strength of 400 MPa and internal pressure bearing strength of 4.24 MPa. In this embodiment, the hollow insulating tube 100 formed by pultrusion-winding process is adopted, and the hollow insulating tube formed by wet winding is taken as a comparative embodiment. According to strength requirements of the hollow insulating tube, the hollow insulating tube in the comparative embodiment should be designed to have an inner diameter of 230 mm and an outer diameter of 248 mm, that is, have a wall thickness of 9 mm. To achieve the same requirement for mechanical performance, when the layering structure of the hollow insulating tube 100 in this embodiment is adopted, the hollow insulating tube 100 is only required to be designed to have an inner diameter of 230 mm and an outer diameter of 242 mm, that is, have a wall thickness of 6 mm, which can greatly reduce production and manufacturing costs. In addition, it takes at least 16 h to cure and mold the hollow insulating tube formed by wet winding (with an inner diameter of 230 mm, an outer diameter of 248 mm, and a length of 1000 mm), while it takes only 0.5 h to cure and mold the hollow insulating tube in this embodiment (with an inner diameter of 230 mm, an outer diameter of 242 mm, and a length of 1000 mm). Therefore, by use of the layering structure in this embodiment, manufacturing efficiency of the hollow insulating tube 100 can be greatly improved.

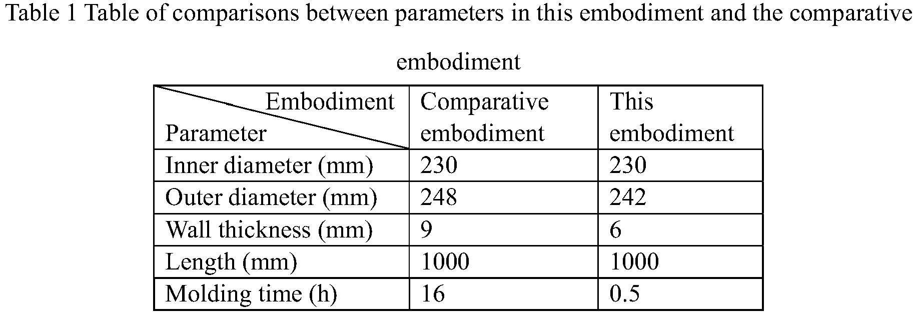

In addition, if the hollow insulating tube (with design requirements for axial bending strength of 400 MPa and internal pressure bearing strength of 4.24 MPa) is formed by pultrusion, in order to meet axial strength of the hollow insulating tube and also meet circumferential strength of the hollow insulating tube, the wall thickness of the hollow insulating tube is required to be larger. However, in the present application, the wall thickness of the hollow insulating tube 100 with both axial strength and circumferential strength is required to be designed only according to axial and circumferential strength requirements, and there is no need to additionally increase the wall thickness to meet the strength requirements of the hollow insulating tube 100.

Therefore, compared with the hollow insulating tube formed by winding or the hollow insulating tube formed by pultrusion, under the condition achieving the same performance, the wall thickness of the hollow insulating tube 100 in this embodiment can be reduced, and materials can be saved, thereby reducing costs.

In addition, when the hollow insulating tubes with same mechanical properties are manufactured using a pultrusion-winding process and a wet winding forming process respectively, a cost reduction rate of the pultrusion-winding process can reach more than 40% by comparing three aspects of materials, labor, and energy consumption.

Further, economic advantages of the pultrusion-winding process are also reflected in investment in fixed assets. From the perspective of investment in fixed assets and management costs, comparative analysis shows that the use of the wet winding process for production requires investment of different specifications of mandrel tooling, hot air ovens, winding machines, demoulding machines, cutting machines, lathes, trolleys equipped with cranes, hoists, logistics transport vehicles, and the like, which integrates requirements for multiple types of equipment. At the same time, due to multi-process flow, products and equipment also need to occupy more production plants, and it is preliminarily estimated that a single production line will be invested in nearly ten million RMB. However, the pultrusion-winding process only requires investment in forming molds and traction equipment for production, which requires less equipment and significantly reduces equipment asset investment. In addition, due to tight and organized production lines, the flow of products between processes is reduced, and a demand for plant floor space is reduced. For the same kind of product, compared with the production requirements of the wet winding process the investment in a single production line of the pultrusion-winding process is estimated to be about one million RMB. Therefore, both on the technical level or the economic level, the hollow insulating tube 100 formed by the pultrusion-winding process in this application has huge advantages.

A linear density of the fiber yarns of the inner axial layer 110 and a linear density of the fiber yarns of the outer axial layer 130 selectively range from 400 tex to 19200 tex, and a linear density of the fiber yarns of the circumferential layer 120 selectively ranges from 1200 tex to 9600 tex. A specific selection may be made according to product performance and trial production requirements of the hollow insulating tube 100. The linear density of the fiber yarns refers to mass of a yarn per unit length. The lower the linear density, the better the wettability of the yarn and the better mechanical properties of the hollow insulating tube 100.

In some implementation scenarios, the linear densities of the fiber yarns of the inner axial layer, the circumferential layer, and the outer axial layer may be selected arbitrarily within the above linear density ranges.

In another implementation scenario, linear densities of the fiber yarns of the inner axial layer 110, the circumferential layer 120, and the outer axial layer 130 are in an increasing order, which can appropriately reduce manufacturing costs of the hollow insulating tube 100.

In a specific embodiment, the linear density of the fiber yarns of the inner axial layer 110 ranges from 400 tex to 2400 tex, the linear density of the fiber yarns of the circumferential layer 120 ranges from 1200 tex to 9600 tex, and the linear density of the fiber yarns of the outer axial layer 130 ranges from 4800 tex to 19200 tex. When in use, the inner wall of the hollow insulating tube 100 may be exposed to arcing radiation and chemical corrosion. Therefore, the fiber yarns on the inner wall of the hollow insulating tube 100 are required to have optimal electrical properties and chemical corrosion resistance, and the fiber yarns in the outer layer of the hollow insulating tube 100 mainly provide mechanical properties. Fiber yarns with the linear density of 400 tex to 2400 tex have good wettability, and the cured and molded inner axial layer 110 has good chemical corrosion resistance and electrical properties, as well as excellent mechanical properties, meeting the requirement of the inner axial layer 110, so fiber yarns with any linear density within this range can be selected. In addition, fiber yarns with the linear density of 1200 tex to 9600 tex also have good wettability. In a case that performance requirements of the circumferential layer 120 is lower than that of the inner axial layer 110, fiber yarns of 1200 tex to 9600 tex are lower in cost and meet the requirements of the circumferential layer 120, so fiber yarns with any linear density within this range can be selected. The outer axial layer 130 has the lowest performance requirements for the fiber yarns, and thud adopts the fiber yarns having the highest linear density and the lowest cost. Fiber yarns with the linear density of 4800 tex to 19200 tex may be adopted. Fiber yarns with any linear density in this range can be used, which meets the requirement of the outer axial layer 130. If the linear density is higher, the wettability is lower, and the fiber yarns have lower costs. Therefore, the linear densities of the fiber yarns of the inner axial layer 110, the circumferential layer 120, and the outer axial layer 130 are in an increasing order, which can appropriately reduce the cost while ensuring the performance requirement of the hollow insulating tube 100, and optimize the manufacturing cost of the hollow insulating tube 100. In addition, diameters of the fiber yarns of various layers are preferably uniform to facilitate calculation and design in a layering design stage. Generally, as long as the linear densities of the inner axial layer 110, the circumferential layer 120, and the outer axial layer 130 are in an increasing order. It may be understood that, in other implementations, the linear densities of the fiber yarns of the inner axial layer, the circumferential layer, and the outer axial layer may be selected within the respective ranges thereof, and is not limited to requirements of the increasing order.

In an implementation scenario, the hollow insulating tube 100 is made of glass fibers, that is, the axial fiber yarns of the inner axial layer 110 and the outer axial layer 130 and the circumferential fiber yarns of the circumferential layer 120 are all made of glass fibers to prevent loose interface connections caused by the fact that the layering structure of the hollow insulating tube 100 are made of different materials. In addition, the glass fibers are the most common and most cost-effective ordinary fibers on the market currently, which can meet the performance requirements of the hollow insulating tube 100. That is, the product can be economically maximized by maximizing control of material costs.

In another implementation scenario, the hollow insulating tube 100 is made of polyester fibers. That is, the axial fiber yarns of the inner axial layer 110 and the outer axial layer 130 and the circumferential fiber yarns of the circumferential layer 120 are all polyester fibers. Compared with the glass fibers, the polyester fibers have stronger corrosion resistance and better electrical performance. If the inner axial layer 110 is directly made of the polyester fibers, there is no need to provide a polyester fiber lining layer on the inner wall of the hollow insulating tube 100, reducing manufacturing costs. Certainly, in other implementations, the hollow insulating tube may alternatively be made of aramid fibers or other types of fibers with good insulation and mechanical properties. The type of the fiber yarn is determined according to a specific application scenario and an operating condition of the hollow insulating tube, as long as the internal insulation performance requirements of the hollow insulating tube and overall mechanical performance requirements of the hollow insulating tube can be met.

A specific layering structure of the hollow insulating tube may be designed according to requirements for circumferential strength and axial strength. In other words, design transformation is performed based on the axial strength requirements and the circumferential strength requirements of the hollow insulating tube, and a thickness of each layer of the hollow insulating tube is outputted. Moreover, the inner axial layer 110, the circumferential layer 120, and the outer axial layer 130 have different performance requirements for the fiber yarns. Generally, the fiber yarns of the inner axial layer 110 have the highest performance requirements, the best quality, and the highest price, followed by the circumferential layer 120, and the outer axial layer 130 is the last. Therefore, by comprehensively considering thickness requirements and performance requirements of the layers and by designing and experimenting, an optimal layering structure design scheme can be obtained, which can optimize the manufacturing cost while ensuring the performance of the hollow insulating tube 100.

In this embodiment, the resin liquid may be any one of polyurethane resin, epoxy resin, vinyl resin, phenolic resin, and unsaturated polyester resin. The hollow insulating tube 100 made of the fiber yarns wetted with the resin liquid has stable mechanical properties and excellent electrical properties.

Through the structural design of the circumferential layer 120, the inner axial layer 110, and the outer axial layer 130 of the hollow insulating tube 100 in this embodiment, a circumferential pressure-bearing capacity and an axial pressure-bearing capacity of the hollow insulating tube 100 are greatly improved. In addition, the main structure of the hollow insulating tube 100 is preformed, and is then placed in the curing mold for heating and curing. As such, the product has a compact production process and compact layout of product lines, which can greatly improve curing and molding efficiency, shorten a product processing cycle, and improve product manufacturing efficiency.

In another embodiment, as shown in FIG. 2, a circumferential layer 220 of a hollow insulating tube 200 includes a forward winding layer 221 and a backward winding layer 222. The forward winding layer 221 and the backward winding layer 222 are arranged adjacent to each other in a radial direction of the hollow insulating tube 200. That is, the forward winding layer 221 and the backward winding layer 222 have the same winding angle and opposite winding directions, which can further enhance process stability of the circumferential layer 220 and also improve circumferential strength of the hollow insulating tube 200. Specifically, after the inner axial layer 210 is formed, the backward winding layer 222 is formed outside the inner axial layer 210 by winding, and then the forward winding layer 221 is formed outside the backward winding layer 222 by winding. The "forward" and "backward" herein do not specify which direction is "forward" and which direction is "backward", as long as the winding directions of the forward winding layer 221 and the backward winding layer 222 are opposite. In other implementations, the winding angle of the forward winding layer and the winding angle of the backward winding layer may alternatively be different, as long as the circumferential strength requirements of the hollow insulating tube is met. Alternatively, more than one forward winding layer and more than one backward winding layer are provided. A plurality of forward winding layers and a plurality of backward winding layers are alternately arranged, which further improves the circumferential strength of the hollow insulating tube, which is not limited herein.

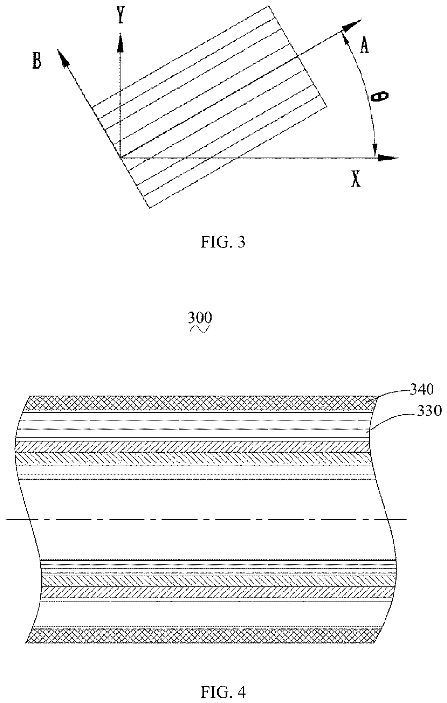

In an implementation scenario, referring to FIGS. 2 and 3, the winding angle of the circumferential layer 220 is represented by θ. Preferably, the winding angle of the forward winding layer 221 is the same as the winding angle of the backward winding layer 222, both of which are represented by θ. The winding angles θ of the forward winding layer 221 and the backward winding layer 222 range from 45° to 85° (including 45° and 85°, similarly hereinafter). The circumferential fiber yarns are limited by the actual winding layer design and the selected types of materials. The winding angle θ is set to range from 45° to 85°, which is mainly used to provide the circumferential strength of the hollow insulating tube 200. The winding process with a winding angle less than 45° is small-angle winding, which leads to difficult process molding and low efficiency. A main reason is that, during the small-angle winding, a winding speed is required to be reduced to match a pultrusion speed. If the speed is excessively low, pauses and other phenomena may occur, which affects the molding process. When the winding angle is greater than 85°, the fiber yarns are approximately purely circumferentially wound. That is, the circumferential fiber yarns are nearly perpendicular to the axial direction of the hollow insulating tube 200. Simultaneous winding in the forward and backward directions does not have a significant effect on improving the circumferential strength of the hollow insulating tube 200. That is, when the winding angle of the circumferential layer ranges from 85° to 90° (including 90° and excluding 85°), the winding in the forward and backward directions may be performed at the same time, or one-way winding may be directly performed. Therefore, when winding in the forward and backward directions simultaneously, setting the winding angle θ to range from 45° to 85° can improve circumferential strength of the hollow insulating tube 200, match the winding speed with the pultrusion speed, resulting in high molding efficiency and good finished product quality.

The structure of the circumferential layer 220 of the hollow insulating tube 200 in this embodiment is reasonably optimized, thereby ensuring that the hollow insulating tube 200 has more excellent internal pressure strength and axial bending strength at the same time.

In another embodiment, as shown in FIG. 4, a hollow insulating tube 300 further includes an outer mat layer 340. The outer mat layer 340 is a fiber mat and arranged on the outside of an outer axial layer 330. The outer mat layer 340 is a glass fiber mat, which can cover the axial fiber yarns, isolate the axial fiber yarns of the outer axial layer 330 from an inner wall of the mold, prevent direct contact between the axial fiber yarns and the inner wall of the mold, and ensure uniform distribution of the axial fiber yarns and the resin, resulting in better process moldability.

In an implementation scenario, a roughness of an outer surface of the outer mat layer 340 is less than that of the inner surface of the outer mat layer 340. The outer surface of the outer mat layer 340, that is, a surface in contact with the inner wall of the forming mold, is made relatively smooth, so that, when the outer mat layer 340 is introduced into the forming mold, since the outer mat layer 340 is not impregnated with resin, and the outer surface of the outer mat layer 340 is in direct contact with the inner wall of the forming mold, the roughness of the outer surface of the outer mat layer 340 can reduce forward resistance during the molding and ensure process stability of the hollow insulating tube 300. In addition, the roughness of the inner surface of the outer mat layer 340 is set to be slightly larger, which can enhance interface connection strength between the outer mat layer 340 and the outer axial layer 330.

In other implementation scenarios, there may be no difference between the roughness of the outer surface and the roughness of the inner surface of the outer mat layer, which is not specifically limited herein.

In another implementation scenario, the outer mat layer 340 is formed by introducing a fiber mat by a mat guide to cover the outside of the outer axial layer 330, in which the outer mat layer 340 is wetted with the resin liquid that wets an outer surface of the outer axial layer 330, and then heated and cured into an entirety through the forming mold.

The hollow insulating tube 300 in this embodiment includes the outer mat layer 340. The outer mat layer 340 can cover the axial fiber yarns, isolate the axial fiber yarns from the inner wall of the mold, prevent direct contact between the axial fiber yarns and the inner wall of the mold, and ensure uniform distribution of the axial fiber yarns and the resin, resulting in better process moldability.

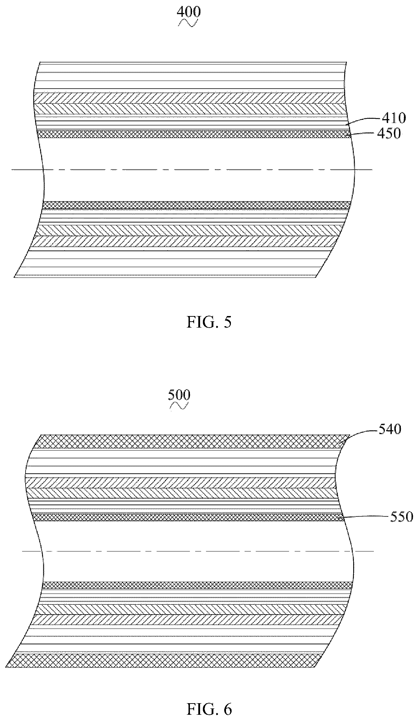

In another embodiment, as shown in FIG. 5, a hollow insulating tube 400 further includes a lining layer 450. The lining layer 450 is a fiber mat and arranged on an inner side of an inner axial layer 410. Similarly, the lining layer 450 is formed by introducing a fiber mat by a mat guide to cover a mandrel, so that the lining layer 450 is formed on the inner side of the inner axial layer 410, may be wetted with the resin liquid that wets the inner surface of the inner axial layer 410, and then heated and cured into an entirety through the forming mold.

An outer surface of the lining layer 450 is a surface of the lining layer 450 in contact with the inner axial layer 410. An inner surface of the lining layer 450 is a surface of the lining layer 450 in contact with the mandrel. Roughness of the outer surface of the lining layer 450 is greater than that of the inner surface of the lining layer 450. The inner surface of the lining layer 450 is in direct contact with the outer wall of the mandrel. As such, the roughness of the inner surface of the lining layer 450 is reduced, which can reduce forward resistance during the molding, and ensure process stability of the hollow insulating tube 400. In addition, the roughness of the outer surface of the lining layer 450 is set to be slightly larger, which can enhance interface connection strength between the lining layer 450 and the inner axial layer 410.

The lining layer 450 may be a polyester surfacing mat, a glass fiber mat, a composite mat, polyester cloth, fiber cloth, or the like, to ensure a better process molding effect on the inner wall of the hollow insulating tube 400, a uniform laying structure, and uniform resin distribution. In addition, different types of materials can be selected to meet different special functional requirements of the product (such as hydrofluoric acid (HF) resistance, arcing resistance, and the like). That is, use requirements of the hollow insulating tube 400 in different application scenarios are met. The glass fiber mat refers to a sheet-like product made of continuous glass fiber strands or chopped glass fiber strands that are non-directionally bonded together through a chemical binder or mechanical effect. The polyester surfacing mat refers to a sheet-like product made of continuous polyester fiber strands or chopped polyester fiber strands that are non-directionally bonded together through a chemical binder or mechanical effect.

The hollow insulating tube 400 in this embodiment includes the lining layer 450, which ensures that the inner wall of the hollow insulating tube 400 has a better process molding effect, a uniform layering structure, and uniform resin distribution. In addition, different materials can be selected to meet different special functional requirements of the product.

In another embodiment, as shown in FIG. 6, a hollow insulating tube 500 includes both an outer mat layer 540 and a lining layer 550, which can further stabilize the performance of both inner and outer walls of the hollow insulating tube 500, prevent defects in the inner and outer walls, and particularly have a more obvious advantage in manufacturing the large-diameter hollow insulating tubes. Specifically, the outer mat layer 540 is constructed, made of the same materials and molded in the same manner as the above outer mat layer 340. The lining layer 550 is constructed, made of the same materials and molded in the same manner as the above lining layer 450, which are not repeatedly described in detail herein.

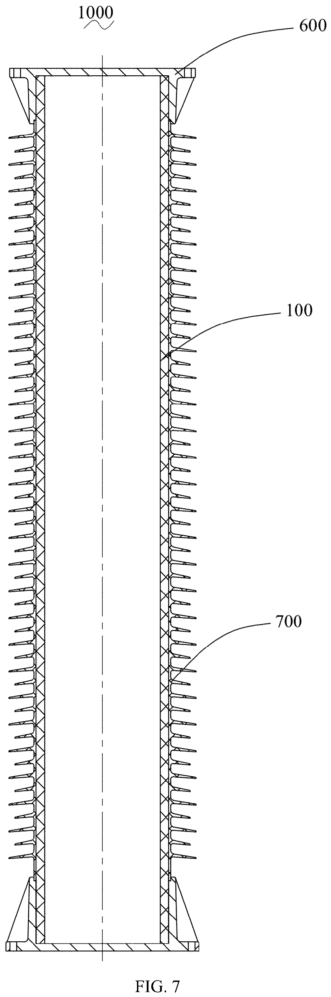

In another embodiment, as shown in FIG. 7, a composite insulator 1000 includes flanges 600 and an insulating shed 700, and further includes the above hollow insulating tube 100. The flanges 600 are fixedly sleeved on two ends of the hollow insulating tube 100 respectively. The insulating shed 700 covers an outer periphery of the hollow insulating tube 100.

In an implementation scenario, the flanges 600 and the hollow insulating tube 100 are sealed and fixed by gluing. In other implementation scenarios, the flanges and the hollow insulating tube may alternatively be fixed by interference fit or in other manners.

In another implementation scenario, the insulating shed 700 is a high-temperature vulcanized silicone rubber shed, which is injected into the outer periphery of the hollow insulating tube 100 by high-temperature injection. In other implementation scenarios, the insulating shed may alternatively be made of other types of rubber materials or hard plastic materials.

In other embodiments, the composite insulator may include any one of the hollow insulating tubes in the above embodiments.

Since the composite insulator 1000 in this embodiment includes the above hollow insulating tube 100, the composite insulator 1000 has better mechanical properties and electrical properties. In addition, the composite insulator 1000 has lower manufacturing costs such as labor costs and material costs.

Further, an embodiment of the present application provides a manufacturing method for a hollow insulating tube 100. As shown in FIG. 1, the manufacturing method includes the following steps.

At S101, an inner axial layer 110 is formed outside a mandrel by pultrusion.

Fiber yarns are pultruded outside the mandrel to form the inner axial layer 110 of the hollow insulating tube 100. Then, axial fiber yarns of the inner axial layer 110 are arranged in an axial direction of the hollow insulating tube 100.

The fiber yarns are pre-impregnated so that the fiber yarns of the inner axial layer 110 are fully impregnated with resin liquid.

At S102, a circumferential layer 120 is formed outside the inner axial layer 110 by winding.

Fiber yarns are wound outside the inner axial layer 110 at a fixed angle to form the circumferential layer 120 of the hollow insulating tube 100. Then, the fiber yarns of the circumferential layer 120 are arranged at a certain angle to the axial direction of the hollow insulating tube 100. The circumferential layer 120 is formed outside the inner axial layer 110 by winding, so that the circumferential layer 120 and the inner axial layer 110 are tightly bonded together.

A winding angle of the circumferential fiber yarns of the circumferential layer 120 ranges from 45° to 90°, details of which are as described above and will not be described again herein.

The fiber yarns are pre-impregnated so that the fiber yarns of the circumferential layer 120 are fully impregnated with the resin liquid.

At S103, an outer axial layer 130 is formed outside the circumferential layer 120 by pultrusion, to obtain a preform of the hollow insulating tube 100.

Fiber yarns are pultruded outside the circumferential layer 120 to form the outer axial layer 130 of the hollow insulating tube 100. Then, axial fiber yarns of the outer axial layer 130 are arranged in the axial direction of the hollow insulating tube 100. The outer axial layer 130 is formed outside the circumferential layer 120 by pultrusion, so that the outer axial layer 130 and the circumferential layer 120 are tightly bonded together to form a preform of the hollow insulating tube 100 including the inner axial layer 110, the circumferential layer 120, and the outer axial layer 130.

The fiber yarns are pre-impregnated so that the fiber yarns of the outer axial layer 130 are fully impregnated with the resin liquid.

The inner axial layer 110, the circumferential layer 120, and the outer axial layer 130 are constructed and made of the same materials as described above, which will not be repeatedly described again.

At S104, the preform is cured to obtain the hollow insulating tube 100.

In this implementation, during the formation of the inner axial layer 110, the circumferential layer 120, and the outer axial layer 130 by pultrusion and winding, the liquid impregnation is carried out layer by layer to fully wet the fiber yarns with the resin liquid. Certainly, in other implementations, the inner axial layer, the circumferential layer, and the outer axial layer may be respectively formed by pultruding and winding dry yarns, and then be impregnated as a whole to form the preform. Such impregnation process takes longer, which is not limited herein, as long as the fiber yarns can be fully wetted with the resin liquid.

Linear densities of the fiber yarns of the inner axial layer 110, the circumferential layer 120, and the outer axial layer 130 are in an increasing order. A specific linear density range is as described above and is not repeatedly described in detail herein.

In another implementation scenario, step S102 includes forming the circumferential layer 220 outside the inner axial layer 210 by successive winding in forward and backward directions.

Referring to FIGS. 2 and 3, the circumferential layer 220 includes a forward winding layer 221 and a backward winding layer 222. During molding of the circumferential layer 220, the fiber yarns are wound in the forward direction at a winding angle of 45° to 85° to form the forward winding layer 221, and wound in the backward direction to form the backward winding layer 222.

In another implementation scenario, as shown in FIG. 4, the hollow insulating tube 300 further includes an outer mat layer 340. The outer mat layer 340 is a fiber mat and arranged on the outside of the outer axial layer 330. That is, subsequent to S103 and prior to S104, the manufacturing method further includes step S11 of covering the outside of the outer axial layer 330 with the fiber mat to form the outer mat layer 340. Specifically, the outer mat layer 340 is formed by introducing the fiber mat by a mat guide to cover the outside of the outer axial layer 330, in which the outer mat layer 340 is wetted with the resin liquid that wets the outer surface of the outer axial layer 330, and then heated and cured into an entirety through the forming mold. The structure and the material of the outer mat layer 340 are as described above and will not be repeatedly described again.

In another implementation scenario, as shown in FIG. 5, the hollow insulating tube 400 further includes a lining layer 450. That is, prior to step S101, the manufacturing method includes step S10 of covering the outside of the mandrel with a fiber mat to form the lining layer 450. Specifically, the lining layer 450 is formed by introducing the fiber mat by a mat guide to cover the mandrel, so that the lining layer 450 is formed on the inner side of the inner axial layer 410, may be wetted with the resin liquid that wets the inner surface of the inner axial layer 410, and then heated and cured into an entirety through the forming mold. The lining layer 450 is constructed and made of the same material as described above, and which will not be repeatedly described again.

In another implementation scenario, as shown in FIG. 6, the hollow insulating tube 500 includes both an outer mat layer 540 and a lining layer 550. That is, prior to S101, the manufacturing method includes step S10. Subsequent to S103 and prior to S104, the manufacturing method includes step S11, which are not repeatedly described in detail herein.

According to the manufacturing method in the present application as described above, the inner axial layer 110 is formed by pultruding impregnated axial fiber yarns, the circumferential layer 120 is formed by winding the impregnated circumferential fiber yarns around the inner axial layer 110, and the outer axial layer 130 is formed by pultruding the impregnated axial fiber yarns outside the circumferential layer 120, so as to form the preform of the hollow insulating tube 100. The preform is heated and molded through the curing mold, to finally obtain the hollow insulating tube 100. The hollow insulating tube 100 has good circumferential strength and axial strength at the same time, can bear the circumferential force and the axial force at the same time, and has excellent mechanical properties. Moreover, the hollow insulating tube 100 has a simple manufacturing process, high manufacturing efficiency, and low manufacturing costs.

The present application may achieve the following beneficial effects. Different from the prior art, the hollow insulating tube in the present application adopts the layering structure including the inner axial layer, the circumferential layer, and the outer axial layer, which significantly improves the circumferential pressure-bearing capacity and the axial pressure-bearing capacity of the hollow insulating tube, leading to high overall mechanical strength.

Meanwhile, the layering structure of the hollow insulating tube is preformed, and then placed in the curing mold for heating and curing, so that the product has a compact production process and compact layout of product lines. Moreover, the inner axial layer can replace the conventional composite mat lining, which may eliminate the step of arranging the composite mat lining on the inner wall of the hollow insulating tube, thereby simplifying the molding process of the hollow insulating tube, thus greatly improving curing molding efficiency, shortening a product processing cycle, and improving product manufacturing efficiency.

In addition, the layering structure of the hollow insulating tube in the present application is designed reasonably. Under the condition of achieving the same performance, the wall thickness of the hollow insulating tube can be reduced, thereby saving materials and reducing material costs.

The technical content and technical features of the present application have been disclosed as above. However, it may be understood that, under the creative concept of the present application, those skilled in the art can make various variants and improvements to structures and materials as above, including the combination of those technical features disclosed or claimed separately herein. It is obvious to include other combinations of these features. These variants and/or combinations all fall into the technical field to which the present application pertains, and fall into the protection scope of the claims of the present application.

## Claims

1. A hollow insulating tube, comprising an inner axial layer, a circumferential layer, and an outer axial layer that are arranged sequentially from inside to outside,
wherein each of the inner axial layer and the outer axial layer comprises a plurality of axial fiber yarns,
the circumferential layer comprises a plurality of circumferential fiber yarns, and
the inner axial layer, the circumferential layer, and the outer axial layer are wetted with resin liquid and then cured to form the hollow insulating tube.

2. The hollow insulating tube according to claim 1, wherein a winding angle of the circumferential layer ranges from 45° to 90°.

3. The hollow insulating tube according to claim 1, wherein the circumferential layer comprises a forward winding layer and a backward winding layer, the forward winding layer and the backward winding layer being arranged adjacent to each other in a radial direction of the hollow insulating tube.

4. The hollow insulating tube according to claim 3, wherein a winding angle of the forward winding layer and a winding angle of the backward winding layer range from 45° to 85°.

5. The hollow insulating tube according to claim 1, wherein linear densities of the fiber yarns of the inner axial layer, the circumferential layer, and the outer axial layer are in an increasing order.

6. The hollow insulating tube according to claim 1, wherein a linear density of the fiber yarns of the inner axial layer ranges from 400 tex to 2400 tex, a linear density of the fiber yarns of the circumferential layer ranges from 1200 tex to 9600 tex, and a linear density of the fiber yarns of the outer axial layer ranges from 4800 tex to 19200 tex.

7. The hollow insulating tube according to claim 1, wherein the axial fiber yarns and the circumferential fiber yarns are polyester fibers or glass fibers.

8. The hollow insulating tube according to claim 1, further comprising a lining layer, the lining layer being a fiber mat and arranged on an inner side of the inner axial layer.

9. The hollow insulating tube according to claim 8, wherein the fiber mat is a polyester surfacing mat or a glass fiber mat.

10. The hollow insulating tube according to claim 1, further comprising an outer mat layer, the outer mat layer being a fiber mat and arranged on an outside of the outer axial layer.

11. The hollow insulating tube according to claim 10, wherein a roughness of an outer surface of the outer mat layer is less than that of an inner surface of the outer mat layer.

12. The hollow insulating tube according to claim 1, wherein the resin liquid is any one of polyurethane resin, epoxy resin, vinyl resin, phenolic resin, and unsaturated polyester resin.

13. A manufacturing method for a hollow insulating tube, comprising the following steps:
S101, forming an inner axial layer outside a mandrel by pultrusion;
5102, forming a circumferential layer outside the inner axial layer by winding;
S103, forming an outer axial layer outside the circumferential layer by pultrusion, to obtain a preform of the hollow insulating tube; and
S104, curing the preform to obtain the hollow insulating tube.

14. The manufacturing method according to claim 13, wherein in step S102, the circumferential layer is formed outside the inner axial layer by successive winding in forward and backward directions, at a winding angle ranging from 45° to 85°.

15. The manufacturing method according to claim 13, further comprising, subsequent to step S103 and prior to step S104, step S11 of covering an outside of the outer axial layer with a fiber mat to form an outer mat layer.

16. The manufacturing method according to claim 13, further comprising, prior to step S101, step S10 of covering an outside of the mandrel with a fiber mat to form a lining layer.

17. A composite insulator, comprising flanges and an insulating shed, wherein the composite insulator further comprises the hollow insulating tube according to any one of claims 1 to 12,
the flanges are fixedly sleeved on two ends of the hollow insulating tube respectively, and
the insulating shed covers an outer periphery of the hollow insulating tube.
